# EUROPÄISCHE PATENTSCHRIFT

(11) **EP 0 861 755 B1**
(45) Veröffentlichungstag und Bekanntmachung des Hinweises auf die Patenterteilung: **03.07.2002**
(21) Anmeldenummer: 98101707.2
(22) Anmeldetag: 02.02.1998
(51) Int. Cl.: B60R 5/04

(54) **Laderaum-Abdeckung für Kraftwagen, insbesondere für Kombinations-Personenkraftwagen**
Load compartment cover for vehicles, in particular for station wagons
Couvercle pour le compartiment de charge d'un véhicule, notamment d'une voiture familiale

(30) Priorität: 26.02.1997 DE 19707676
(43) Veröffentlichungstag der Anmeldung: 02.09.1998
(73) Patentinhaber: PETER BUTZ GmbH & Co Verwaltungs-KG, 40764 Langenfeld (DE)
(72) Erfinder: Van Lieshout, Steven, 2440 Geel (BE)
(74) Vertreter: Patentanwälte Ostriga & Sonnet

(56) Entgegenhaltungen:
- DE-A- 3 631 488
- PATENT ABSTRACTS OF JAPAN vol. 1997, no. 08, 29. August 1997 (1997-08-29) & JP 09 099781 A (MITSUBISHI MOTORS CORP), 15. April 1997 (1997-04-15)

## Beschreibung

Die Erfindung betrifft eine Laderaumabdeckung für Kraftwagen, insbesondere für Kombinations-Personenkraftwagen. Eine solche Laderaumabdeckung ist beispielsweise in der DE 41 29 659 C1 beschrieben. Die dort angedeuteten Griffhandhaben (s. Fig. 2A Pos. 23) können auch als Durchgriffsöffnungen für eine Bedienungshand ausgebildet sein.

Während es sich beim Gegenstand der DE 41 29 659 C1 um eine in Öffnungs- und Schließrichtung verschiebliche auseinander- und zusammenfaltbare Abdeckplane handelt, können derartige Bedienungs-Durchgriffsöffnungen auch bei ab- und aufwickelbaren Abdeckrollos vorgesehen sein (vgl. allgemein DE 40 13 157 C1).

Ausgehend von einer Laderaumabdeckung für Kraftwagen, insbesondere für Kombinations-Personenkraftwagen, wie sie beispielsweise in der DE 41 29 659 C1 beschrieben ist, liegt der Erfindung die Aufgabe zugrunde, eine solche Laderaumabdeckung hinsichtlich ihrer Bedienungs-Durchgriffsöffnung zu verbessern.

Diese Aufgabe wird entsprechend der Erfindung dadurch gelöst, daß der Durchgriffsöffnung mindestens ein Abdeckelement zugeordnet ist, welches in seiner Geschlossenstellung die Durchgriffsöffnung verdeckt und welches in seiner Geschlossenstellung lösbar arretierbar ist.

Die Bedienungs-Durchgriffsöffnung der erfindungsgemäßen Laderaumabdeckung bietet sich nicht mehr, wie bislang, als den ästhetischen Eindruck beeinträchtigendes Loch dar. Vielmehr gestattet es das entsprechend der Erfindung vorgesehene Abdeckelement, die Abdeckplane auch im Bereich der jeweiligen Durchgriffsöffnung unauffällig bzw. einheitlich zu gestalten. Dabei ist es wesentlich, daß das entsprechend der Erfindung vorgesehene Abdeckelement in seiner Geschlossenstellung die Durchgriffsöffnung gänzlich verdeckt und in seiner Geschlossenstellung lösbar arretierbar ist.

Die erfindungsgemäße Laderaumabdeckung wird insbesondere auch deswegen als vorteilhaft empfunden, weil es potentiellen Dieben nunmehr verwehrt ist, durch die Fahrzeugfenster (z.B. durch das Heckfenster) und zugleich durch die Durchgriffsöffnungen hindurch im Kofferraum befindliches Ladegut auszuspähen.

In weiterer Ausgestaltung der Erfindung ist das Abdeckelement eine an der Abdeckplane benachbart der Durchgriffsöffnung mindestens mittelbar angelenkte Abdeckklappe.

Das Abdeckelement läßt sich besonders unauffällig gestalten, wenn es an der dem Laderaumboden zugewandten Unterfläche der Abdeckplane angelenkt ist und in seiner Geschlossenstellung die Durchgriffsöffnung untergreift.

Bei einer besonders bevorzugten erfindungsgemäßen Ausführungsform ist das Abdeckelement mittels Federrückstellkraft in seine Geschlossenstellung versetzbar. Wenn es sich dabei um ein die Durchgriffsöffnung nicht über- sondern vielmehr untergreifendes Abdeckelement handelt, braucht die Bedienungshand nur in die Durchgriffsöffnung einzutauchen. Dabei gibt das Abdeckelement zugleich entgegen der Federrückstellkraft nach und kehrt automatisch in seine Geschlossenstellung zurück, sobald die Bedienungshand aus der Durchgriffsöffnung zurückgezogen wurde.

Entsprechend einer Erfindungsvariante ist das Abdeckelement an einer sich quer zur Öffnungs- oder Schließrichtung erstreckenden Achse einseitig benachbart der Durchgriffsöffnung angelenkt. Eine Zugbetätigung durch die Bedienungshand gestaltet sich erfindungsgemäß besonders günstig im Zusammenhang mit entgegen ihrer Auszugsrichtung federbelasteten Abdeckrollos dann, wenn die Achse des Abdeckelements an der dem freien Randbereich der Abdeckplane abgewandten Seite der Durchgriffsöffnung angeordnet ist.

Weitere vorteilhafte Merkmale sind zusätzlichen Unteransprüchen zu entnehmen.

In den Zeichnungen ist ein bevorzugtes Ausführungsbeispiel entsprechend der Erfindung näher dargestellt, es zeigt
Fig. 1 eine teilweise Draufsicht auf die Oberseite einer Abdeckplane, insbesondere auf deren rückwärtigen freien Randbereich mit einer etwas vergrösserten Durchgriffsöffnung,
Fig. 2 in Anlehnung an die Darstellung gemäß Fig. 1 eine Ansicht der Unterfläche der Abdeckplane und
Fig. 3 die Darstellung eines Querschnitts entsprechend der in Fig. 1 mit III-III bezeichneten Schnittlinie.

In den Zeichnungen ist eine abschnittweise dargestellte Abdeckplane 11 einer Laderaumabdeckung 10 für Kraftwagen gezeigt.

Die Laderaumabdeckung 10 weist eine Abdeckplane 11 aus flexiblem textilen Werkstoff auf, deren in Schließrichtung z weisender freier Randbereich, der z.B. schürzenartig ausgebildet sein kann, mit der Bezugsziffer 12 versehen ist. Die Abdeckplane 11 erstreckt sich hauptsächlich horizontal, während sich hierzu der freie Randbereich 12 leicht geneigt abwärts erstreckt. Die Öffnungsrichtung der Abdeckplane 11 ist mit y bezeichnet. Die Abdeckplane 11 kann entweder in den Richtungen z und y translatorisch bewegt und dabei entweder auseinandergefaltet oder zusammengefaltet werden. Andererseits besteht bei einem Abdeckrollo die Möglichkeit, die Abdeckplane 11 entgegen der Rückstellkraft eines Federmotors in Öffnungsrichtung z auszuziehen und mit der Rückstellkraft des Federmotors entsprechend der Schließrichtung y aufzuwickeln.

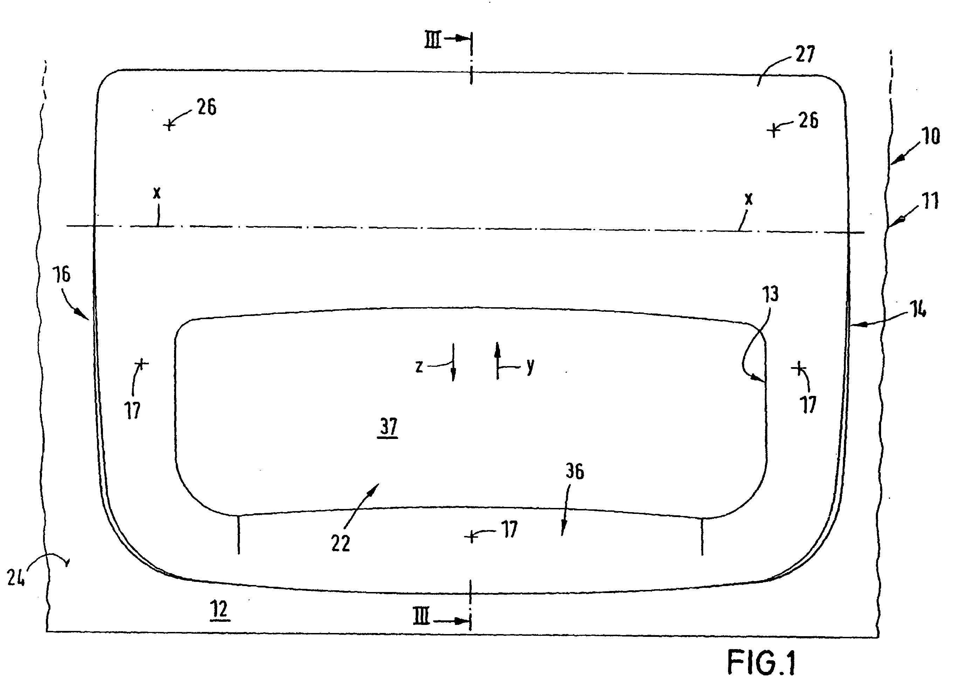

Gemäß Fig. 1 ist eine Durchgriffsöffnung 13 von einem oben auf der Deckfläche 24 der Abdeckplane 11 befestigten oberen Rahmenteil 14 umgeben. Das obere Rahmenteil 14 kooperiert mit einem an der Unterfläche bzw. Unterseite 25 der Abdeckplane 11 befestigten unteren Rahmenteil 15. Oberes Rahmenteil 14 und unteres Rahmenteil 15 bilden gemeinsam einen Rahmen 16.

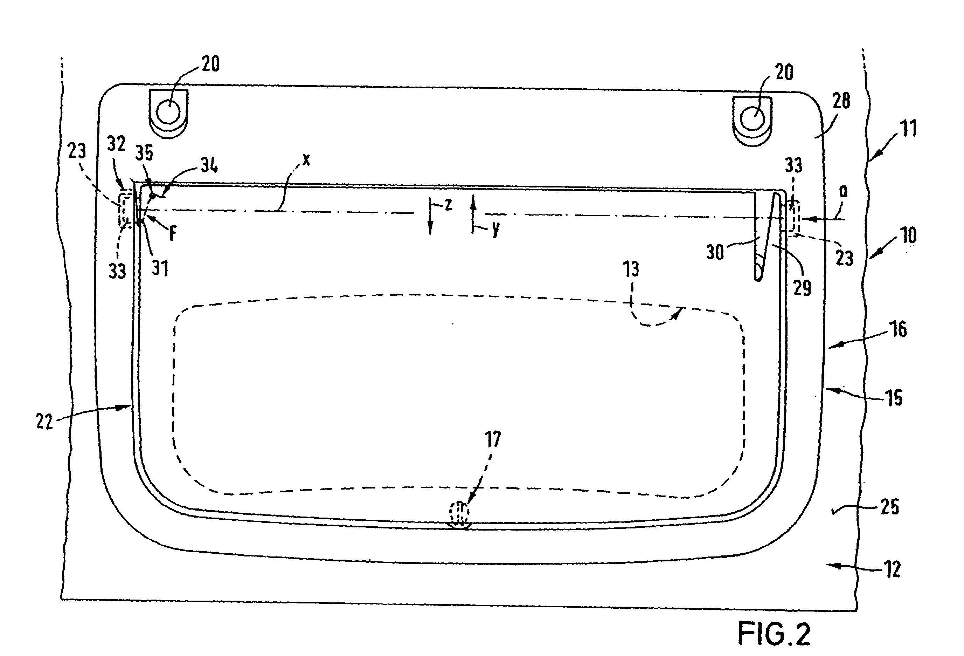

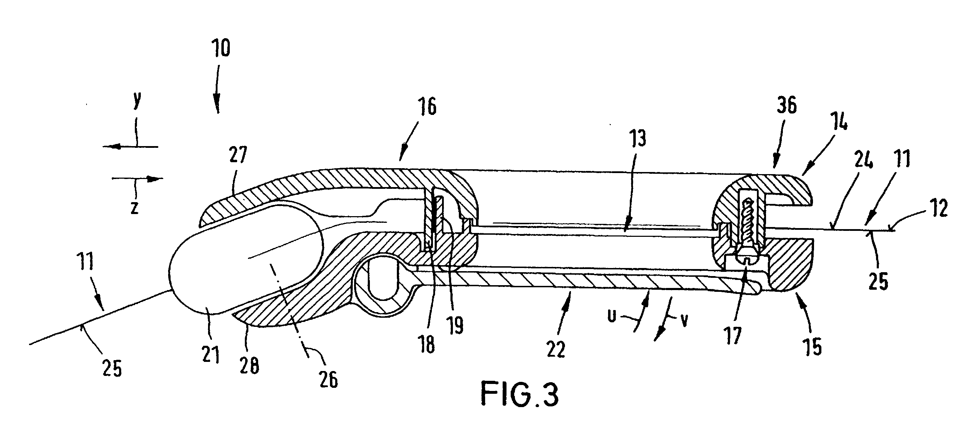

Mehrere Schraubverbindungen, von denen nur eine Schraubverbindung 17 in den Fig. 2 und 3 angedeutet ist, legen beide Rahmenteile 14 und 15 aneinander fest und durchgreifen dabei zugleich die Abdeckplane 11. Die Abdeckplane 11 ist im übrigen zwischen den beiden etwa labyrinthartig gegeneinander gestellten Fortsätzen 18, 19 des oberen Rahmenteils 14 und des unteren Rahmenteils 15 einzuklemmen.

Eine andere Schraubverbindungsanordnung ist mit der strichpunktierten Linie bei 26 angedeutet. Hierzu weist das untere Rahmenteil 15 Schraubendurchgangslöcher 20 zur Herstellung der Schraubverbindungen 26 auf. Die Schraubverbindungen 26 sollen dazu dienen, die rückwärtige Zugstange 21, welche dem beidendigen Einhängen der geschlossenen Abdeckplane 11 an karosserieseitigen Widerlagern dient, zwischen den beiden klauenartigen Ansätzen 27, 28 der oberen und unteren Rahmenteile 14, 15 festzulegen.

Insbesondere aus Fig. 2 geht hervor, daß die dort mit einer gestrichelten Kontur angedeutete Durchgriffsöffnung 13 von einem Abdeckelement, und zwar von einer Abdeckklappe 22, untergriffen ist.

Die Abdeckklappe 22 ist über Achsstummel 33, welche in Lageraufnahmen 23 des unteren Rahmenteils 15 schnappverrastend aufgenommen sind, schwenkbar gehalten. Die von den beiden Achsstummeln 33 dargestellte geometrische Achse ist durch eine mit x bezeichnete Strichlinie kenntlich gemacht.

Die Rahmenteile 14, 15 und die Abdeckklappe 22 sind Kunststoffspritzgußteile. Der dazu verwendete Kunststoff besitzt, zumindest was die Abdeckklappe 22 anlangt, gewisse federelastische Eigenschaften. Auf diese Weise ist einer der Achsstummel 33 in Richtung a entgegen der Federrückstellkraft des Kunststoffs einfederbar, um eine Schnappverrastung der Achsstummel 33 in den beiden Aufnahmen 23 zu verwirklichen. Hierzu ist die stoffschlüssige Anbindung 29 des rechts in Fig. 2 dargestellten Achsstummels 33 unter Bildung einer etwa keilförmigen Lücke 30 freigeschnitten.

Auf den links in Fig. 2 dargestellten Achsstummel 33 ist der schraubenförmig gewendelte Bereich 31 einer Schenkelfeder F aufgeschoben. Deren einer Federschenkel 32 ist im unteren Rahmenteil 15 gehalten, während der andere Federschenkel 34 in einem etwa lochartigen Widerlager 35 im Körper der Klappe 22 gehalten ist. Die Anordnung der Schenkelfeder F ist dabei so getroffen, daß deren Federrückstellkraft die Abdeckklappe 22 ständig gegen die Unterfläche 25 der Abdeckplane 11 hält.

Die Funktion der gezeigten Anordnung ist folgende: Wenn die Abdeckplane 11 betätigt, beispielsweise in Öffnungsrichtung z nach hinten zu einer nicht dargestellten Heckklappe hin eines Kombinations-Personenkraftwagens gezogen werden soll, berühren zunächst die Fingerspitzen der Bedienungshand die obere Deckfläche 37 der Abdeckklappe 22. Letztere schwenkt beim weiteren Eintauchen der Bedienungshand in die Durchgriffsöffnung 13 entgegen der Rückstellkraft der Schenkelfeder F in Richtung v um die Schwenkachse x nach unten zum Kofferraumboden hin. Dadurch wird der von den oberen und unteren Rahmenteilen 14, 15 gebildete Griffschenkel 36 freigegeben, so daß die Bedienungshand diesen umgreifen und die Abdeckplane 11 z.B. in Richtung z entgegen der Speicherenergie einer Feder-Wickelwelle bewegen kann. Die Anordnung der Schwenkachse x an der dem freien Randbereich 12 der Abdeckplane 11 abgewandten Seite ist demnach in Verbindung mit Abdeckrollos besonders vorteilhaft.

Sobald sich die Bedienungshand aus der Durchgriffsöffnung 13 zurückgezogen hat, drückt die Schenkelfeder F die Abdeckklappe 22 entlang der Schwenkrichtung u wieder in Richtung Unterfläche 25 der Abdeckplane 11. Wenn sich die Abdeckplane 11 in ihrem Geschlossenzustand befindet, verwehrt die verschlossene Abdeckklappe 22 gemäß den Fig. 1 und 3 einen unerwünschten Einblick auf das von der Abdeckplane 11 überdeckte kofferraumseitige Ladegut.

## Patentansprüche

1. Laderaumabdeckung (10) für Kraftwagen, insbesondere für Kombinations-Personenkraftwagen, mit einer karosserieseitig befestigten, in einer Offen- oder Geschlossenstellung haltbaren, mindestens teilweise flexiblen Abdeckplane (11), deren sich quer zur Öffnungs- (y) oder Schließrichtung (z) erstreckender freier Randbereich (12) mit mindestens einer Durchgriffsöffnung (13) für eine Bedienungshand versehen ist, **dadurch gekennzeichnet, daß** der Durchgriffsöffnung (13) mindestens ein Abdeckelement (22) zugeordnet ist, welches in seiner Geschlossenstellung die Durchgriffsöffnung (13) verdeckt und welches in seiner Geschlossenstellung lösbar arretierbar ist.

2. Laderaumabdeckung nach Anspruch 1, **dadurch gekennzeichnet, daß** das Abdeckelement eine an der Abdeckplane (11) benachbart der Durchgriffsöffnung (13) mindestens mittelbar angelenkte Abdeckklappe (22) ist.

3. Laderaumabdeckung nach Anspruch 2, **dadurch gekennzeichnet, daß** die das Abdeckelement (22) an der einem Laderaumboden zugewandten Unterfläche (25) der Abdeckplane (11) angelenkt ist und in seiner Geschlossenstellung die Durchgriffsöffnung (13) untergreift.

4. Laderaumabdeckung nach einem der Ansprüche 1 bis 3, **dadurch gekennzeichnet, daß** das Abdeckelement (22) mittels Federrückstellkraft (bei F) in seine Geschlossenstellung versetzbar ist.

5. Laderaumabdeckung nach Anspruch 4, **dadurch gekennzeichnet, daß** das Abdeckelement (22) an einer sich quer zur Öffnungs- (y) oder Schließrichtung (z) erstreckenden Achse (bei x) einseitig benachbart der Durchgriffsöffnung (13) angelenkt ist.

6. Laderaumabdeckung nach Anspruch 5, **dadurch gekennzeichnet, daß** die Achse (bei x) an der dem freien Randbereich (12) der Abdeckplane (11) abgewandten Seite der Durchgriffsöffnung (13) angeordnet ist.

7. Laderaumabdeckung nach einem der Ansprüche 1 bis 6, **dadurch gekennzeichnet, daß** zur Halterung des Abdeckelements (22) ein die Durchgriffsöffnung (13) einfassender Rahmen (16) an der Abdeckplane (11) befestigt ist.

8. Laderaumabdeckung nach Anspruch 7, **dadurch gekennzeichnet, daß** der Rahmen (16) zwei Rahmenteile (14, 15), nämlich ein an der Unterseite (25) der Abdeckplane (11) angeordnetes unteres Rahmenteil (15) und ein an der Oberseite (24) der Abdeckplane (11) angeordnetes oberes Rahmenteil (14), aufweist.

9. Laderaumabdeckung nach Anspruch 8, **dadurch gekennzeichnet, daß** beide Rahmenteile (14, 15) aneinander (bei 17) befestigt sind.

10. Laderaumabdeckung nach einem der Ansprüche 7 bis 9, **dadurch gekennzeichnet, daß** der Rahmen (16) und das Abdeckelement (22) Gußteile, insbesondere Kunststoffspritzgußteile, sind.

11. Laderaumabdeckung nach einem der Ansprüche 1 bis 10, **dadurch gekennzeichnet, daß** bei einem von einer Abdeckklappe (22) gebildeten Abdeckelement mindestens eine, je ein Ende der Achse (bei x, 33) mit ihrem gewendelten Federkörper (31) umgreifende, Schenkelfeder (F) vorgesehen ist, deren einer Federschenkel (32) sich am Rahmen (16, bei 15) und deren anderer Federschenkel (34) sich an der Abdeckklappe (22) abstützt.

12. Laderaumabdeckung nach Anspruch 11, **dadurch gekennzeichnet, daß** bei einem eine Abdeckklappe (22) bildenden, ein Kunststoffspritzgußteil darstellenden Abdeckelement letzterem als Achse (bei x) an zwei diametral entgegengesetzten Enden je ein nach außen vorragender Achsstummel (33) angeformt ist.

13. Laderaumabdeckung nach Anspruch 12, **dadurch gekennzeichnet, daß** der Rahmen (16, bei 15) für jeden Achsstummel (33) eine Lager-Aufnahmeöffnung (23) bildet.

14. Laderaumabdeckung nach Anspruch 12 oder nach Anspruch 13, **dadurch gekennzeichnet, daß** bei mindestens einem Achsstummel (33) dessen stoffschlüssiger Anformungsbereich zum Abdeckklappenkörper hin freigeschnitten ist, derart, daß der Achsstummel (33) unter Verkürzung der axialen Länge der Achse (bei x) etwa in Achsrichtung (a) einfederbar ist.

## Claims

1. Load compartment cover (10) for motor vehicles, in particular for estate cars, comprising a bodywork-fastened, at least partially flexible tarpaulin (11), which is holdable in an open or closed position and of which the free edge region (12) extending at right angles to the opening direction (y) or closing direction (z) is provided with at least one reach-through opening (13) for an operator's hand, **characterized in that** associated with the reach-through opening (13) is at least one cover element (22), which in its closed position conceals the reach-through opening (13) and which is releasably arrestable in its closed position.

2. Load compartment cover according to claim 1, **characterized in that** the cover element is a cover flap (22), which is at least indirectly coupled to the tarpaulin (11) adjacent to the reach-through opening (13).

3. Load compartment cover according to claim 2, **characterized in that** the the cover element (22) is coupled to the lower surface (25) of the tarpaulin (11) directed towards a loading compartment floor and in its closed position extends under the reach-through opening (13).

4. Load compartment cover according to one of claims 1 to 3, **characterized in that** the cover element (22) is displaceable into its closed position by means of spring restoring force (at F).

5. Load compartment cover according to claim 4, **characterized in that** the cover element (22) at a side adjacent to the reach-through opening (13) is hinged at an axis (at x), which extends at right angles to the opening direction (y) or closing direction (z).

6. Load compartment cover according to claim 5, **characterized in that** the axis (at x) is disposed at the side of the reach-through opening (13) remote from the free edge region (12) of the tarpaulin (11).

7. Load compartment cover according to one of claims 1 to 6, **characterized in that** for supporting the cover element (22) a frame (16), which borders the reach-through opening (13), is fastened to the tarpaulin (11).

8. Load compartment cover according to claim 7, **characterized in that** the frame (16) comprises two frame parts (14, 15), namely a lower frame part (15) disposed on the underside (25) of the tarpaulin (11) and an upper frame part (14) disposed on the top (24) of the tarpaulin (11).

9. Load compartment cover according to claim 8, **characterized in that** both frame parts (14, 15) are fastened (at 17) to one another.

10. Load compartment cover according to one of claims 7 to 9, **characterized in that** the frame (16) and the cover element (22) are castings, in particular plastic injection-moulded parts.

11. Load compartment cover according to one of claims 1 to 10, **characterized in that**, in the case of a cover element formed by a cover flap (22), at least one leg spring (F) is provided, which with its spiralled spring body (31) encompasses one end each of the axis (at x, 33) and of which one spring leg (32) is supported against the frame (16, at 15) and the other spring leg (34) is supported against the cover flap (22).

12. Load compartment cover according to claim 11, **characterized in that**, in the case of a cover element in the form of a plastic injection-moulded part forming a cover flap (22), [on] the latter as an axis (at x) there is formed on each of two diametrically opposed ends an outwardly projecting axle stub (33).

13. Load compartment cover according to claim 12, **characterized in that** the frame (16, at 15) forms a bearing location opening (23) for each axle stub (33).

14. Load compartment cover according to claim 12 or according to claim 13, **characterized in that**, in the case of at least one axle stub (33), its region of cohesive moulding-on is cut free towards the cover flap body in such a way that the axle stub (33) is inwardly springable approximately in axial direction (a) with simultaneous shortening of the axial length of the axis (at x) .

## Revendications

1. Cache de coffre à bagages (10) pour véhicules automobiles, en particulier pour voitures commerciales ou breaks, avec une bâche de recouvrement (11), fixée côté carrosserie, pouvant être maintenue en une position ouverte et fermée, au moins partiellement flexible, dont la zone de bordure (12), s'étendant transversalement par rapport à la direction d'ouverture (y) ou de fermeture (z), est munie d'au moins une ouverture de saisie (13) pour la main d'un opérateur, **caractérisé en ce qu'**à l'ouverture de saisie (13) est associé au moins un élément de recouvrement (22) qui, à sa position fermée, couvre l'ouverture de saisie (13), et qui peut être bloqué de façon désolidarisable à sa position fermée.

2. Cache de coffre à bagages selon la revendication 1, **caractérisé en ce que** l'élément de recouvrement est un volet de recouvrement (22), articulé au moins indirectement à la bâche de recouvrement (11), au voisinage de l'ouverture de saisie (13).

3. Cache de coffre à bagages selon la revendication 2, **caractérisé en ce que** l'élément de recouvrement (22) est articulé à la face inférieure (25), tournée vers un fond de coffre à bagages, de la bâche de recouvrement (11) et couvre par le dessous l'ouverture de saisie (13) lorsqu'il est à sa position fermée.

4. Cache de coffre à bagages selon la revendication 3, **caractérisé en ce que** l'élément de recouvrement (22) est déplaçable à sa position fermée à l'aide d'une force de rappel élastique (en F).

5. Cache de coffre à bagages selon la revendication 4, **caractérisé en ce que** l'élément de recouvrement (22) est articulé sur un côté, sur un axe (en x) s'étendant transversalement par rapport à la direction d'ouverture (y) ou de fermeture (z), au voisinage de l'ouverture de saisie (13).

6. Cache de coffre à bagages selon la revendication 5, **caractérisé en ce que** l'axe est disposé (en x) sur le côté, opposé à la zone de bordure (12) libre de la bâche de recouvrement (11), de l'ouverture de saisie (13).

7. Cache de coffre à bagages selon la revendication 1 à 6, **caractérisé en ce qu'**un cadre (16), entourant l'ouverture de saisie (13), est fixé sur la bâche de recouvrement (11) pour fixer l'élément de recouvrement (22).

8. Cache de coffre à bagages selon la revendication 7, **caractérisé en ce que** le cadre (16) présente deux parties de cadre (14, 15), précisément une partie de cadre inférieure (15), disposée en face inférieure (25) de la bâche de recouvrement (11), et une partie de cadre supérieure (14), disposée sur la face supérieure (24) de la bâche de recouvrement (11).

9. Cache de coffre à bagages selon la revendication 8, **caractérisé en ce que** les deux parties de cadre (14, 15) sont fixées l'une à l'autre (en 17).

10. Cache de coffre à bagages selon l'une des revendications 7 à 9, **caractérisé en ce que** le cadre (16) et l'élément de recouvrement (22) sont des pièces moulées, en particulier des pièces moulées par injection en matière synthétique.

11. Cache de coffre à bagages selon l'une des revendications 1 à 10, **caractérisé en ce que**, dans le cas d'un élément de recouvrement formé par un volet de recouvrement (22), est prévue au moins un ressort à branches (F) entourant respectivement une extrémité de l'axe (en x, 33) par son corps élastique (31) enroulé, ressort à branches dont une branche de ressort (32) prend appui sur le cadre (16, en 15) et dont l'autre branche élastique (34) prend appui sur le volet de recouvrement (22).

12. Cache de coffre à bagages selon la revendication 11, **caractérisé en ce que** dans le cas d'un élément de recouvrement formant un volet de recouvrement (22), formant une pièce moulée par injection en matière synthétique, sur ce dernier élément de recouvrement est formé d'un seul tenant sous forme d'axe (en x), sur deux extrémités diamétralement opposées, chaque fois d'un bout d'axe (33) faisant saillie vers l'extérieur.

13. Cache de coffre à bagages selon la revendication 12, **caractérisé en ce que** le cadre (16, en 15) forme pour chaque bout d'axe (33) une ouverture de logement de palier (23).

14. Cache de coffre à bagages selon la revendication 12 ou la revendication 13, **caractérisé en ce que**, dans le cas où l'on a au moins un bout d'axe (33), sa zone de formation d'un seul tenant, par une liaison par la matière envers le corps de volet de recouvrement, est découpée en laissant un dégagement, de manière que le bout d'axe (33) puisse être enfoncé élastiquement à peu près dans la direction axiale (a), avec raccourcissement de la longueur axiale de l'axe (en x).
